# EUROPÄISCHE PATENTSCHRIFT

(11) **EP 1 725 420 B1**
(45) Veröffentlichungstag und Bekanntmachung des Hinweises auf die Patenterteilung: **13.02.2013**
(21) Anmeldenummer: 05715074.0
(22) Anmeldetag: 09.03.2005
(51) Int. Cl.: B60L 13/04

(54) **MAGNETANORDNUNG FÜR TRAG-, FÜR- UND/ODER BREMSSYSTEME BEI MAGNETSCHWEBEFAHRZEUGEN**
MAGNET ARRANGEMENT FOR CARRYING, GUIDING AND/OR BRAKING SYSTEMS IN MAGNETIC LEVITATION VEHICLES
ENSEMBLE MAGNETIQUE POUR DES SYSTEMES DE PORTEE, DE GUIDAGE ET/OU DE FREINAGE DANS DES VEHICULES A SUSTENTATION MAGNETIQUE

(30) Priorität: 15.03.2004 DE 102004012743
(43) Veröffentlichungstag der Anmeldung: 29.11.2006
(73) Patentinhaber: ThyssenKrupp Transrapid GmbH, 34127 Kassel (DE)
(72) Erfinder: HAHN, Wolfgang, 34125 Kassel (DE); QINGHUA, Zheng, 82024 Taufkirchen (DE)
(74) Vertreter: Lorenz, Bernd Ingo Thaddeus
(86) Internationale Anmeldenummer: PCT/DE2005/000409
(87) Internationale Veröffentlichungsnummer: WO 2005/090111

(56) Entgegenhaltungen:
- JP-A- 54 136 017
- US-A- 4 636 667

## Beschreibung

Die Erfindung betrifft eine Magnetanordnung der im Oberbegriff des Anspruchs 1 angegebenen Gattung.

Bei Magnetanordnungen dieser Art (JP54136017 ODER DE 34 10 119 C2) bestehen die Kerne, insbesondere wenn sie für Tragmagnete bestimmt sind, aus einer Vielzahl von zu einem Blechpaket zusammengefaßten Blechen oder Lamellen, wodurch sich für die Magnetanordnung insgesamt eine geringe Eigendämpfung ergibt. Außerdem werden die Wicklungen der Spulen meistens aus um den Kern gewickelten Leitungsbändern gebildet, die abwechselnd an ihrem radial außen liegenden, vom Kern entfernten und ihren radial innen liegenden, dem Kern nahen Enden miteinander verbunden sind. Dadurch ergeben sich zwischen den einzelnen Lagen der Wicklungen bzw. zwischen den radial am weitesten innen liegenden Lagen und dem Kern zahlreiche parasitäre Längs- und Querkapazitäten, die zusammen mit den Induktivitäten der Wicklungen elektrische Schwingkreise bilden. Diese Schwingkreise führen wegen der geringen Eigendämpfung bei der Anregung der Magnetanordnung zu elektrischen Schwingungen und überhöhten Spannungen an kritischen Punkten der Magnetanordnung, insbesondere beim Erreichen der jeweiligen Resonanzfrequenzen.

Besonders störend wirken sich Spannungsüberhöhungen an denjenigen Stellen der Magnetanordnung aus, an denen die innersten, dem jeweiligen Kern am nächsten liegenden Lagen von zwei benachbarten Wicklungen durch innen liegende Verbindungsleitungen elektrisch miteinander verbunden sind. Dabei können sich so hohe Spannungen bzw. Ströme ergeben, daß die zwischen den ersten Lagen und dem Kern vorhandenen Isolationsschichten zerstört werden und damit die gesamte Magnetanordnung unbrauchbar wird.

Zur Vermeidung von Isolationsschäden wäre es möglich, die Räume zwischen den Kernen und den jeweils ersten Wicklungslagen in radialer Richtung ausreichend groß auzubilden und/oder die inneren Isolationsschichten ausreichend dick zu machen. Das hätte jedoch einerseits den Nachteil, daß die in den Spulen erzeugte Verlustwärme nicht mehr radial über die als Kühlkörper wirkenden Kerne abgeführt werden könnte, was die Kühlwirkung erheblich verschlechtern würde. Andererseits würden die genannten Räume nicht mehr für die Wicklungen zur Verfügung stehen und dadurch die Füllfaktoren reduzieren.

In der Praxis werden die auftretenden Schwingungen bei Magnetanordnungen der eingangs bezeichneten Gattung durch den Spulen parallel geschaltete, ein passives Dämpfungs-Netzwerk bildende Widerstände gedämpft. Ein wesentlicher Nachteil eines derartigen Netzwerks besteht jedoch darin, daß die Widerstände eine nicht unbeachtliche Verlustwärme erzeugen, daher mit Umgebungsluft gut gekühlt werden müssen, was schwierig ist, und außerdem aus Materialien hoher Qualität hergestellt werden müssen, um Beschädigungen beim Betrieb mit Sicherheit zu vermeiden. Dadurch wird der Kostenaufwand für die Magnetanordnung deutlich vergrößert.

Ausgehend davon besteht das technische Problem der vorliegenden Erfindung darin, die Magnetanordnung der eingangs bezeichenten Gattung so auszubilden, daß die beschriebenen Schwingungen auch ohne die Anwendung von ohmschen Widerständen reduziert bzw. unschädlich gemacht werden können.

Zur Lösung dieses Problems dienen die kennzeichnenden Merkmale des Anspruchs 1.

Die Erfindung bringt den Vorteil mit sich, daß die bei der Anregung der Magnetanordnung auftretenden Resonanzen mit Hilfe bzw. unter Anwendung der ohnehin vorhandenen Polrücken stark gedämpft oder die durch sie entstehenden Spannungs- bzw. Stromüberhöhungen derart kompensiert werden, daß Isolationsschäden wirksam vermieden werden.

Weitere Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 einen schematischen Schnitt durch eine Magnetanordnung für Magnetschwebefahrzeuge mit Langstatorantrieb;
Fig. 2 schematisch ein Ersatzschaltbild für die Magnetanordnung nach Fig. 1;
Fig. 3 Schaubilder für bei Anregung der Magnetanordnung nach Fig. 1 und 2 auftretende Resonanzschwingungen;
Fig. 4 und 5 je einen der Fig. 1 entsprechenden Schnitt durch ein erstes und zweites Ausführungsbeispiel einer erfindungsgemäßen Magnetanordnung;
Fig. 6 ein Diagramm mit Dämpfungskurven, die bei Anwendung der Ausführungsbeispiele nach Fig. 4 und 5 erhalten werden; und
Fig 7 und 8 der Fig. 1 entsprechende Schnitte durch zwei weitere Ausführungsbeispiele der erfindungsgemäßen Magnetanordnung.

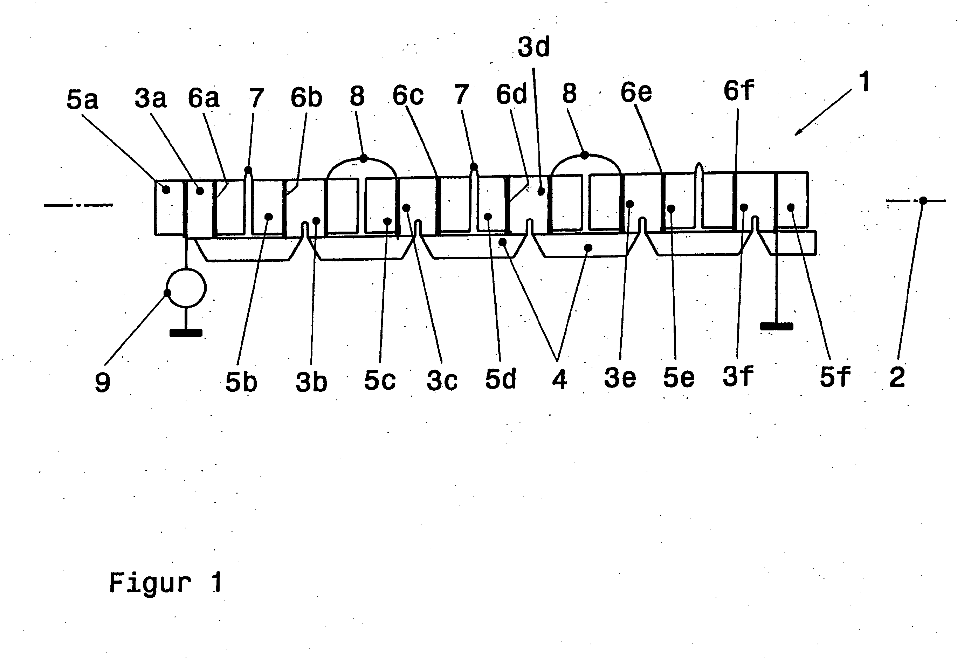

Nach Fig. 1 enthält der Eisenkörper einer üblichen, z.B. als Tragmagnet ausgebildeten Magnetanordnung 1, die sich z.B. für Magnetschwebefahrzeuge mit Langstatoranrieb eignet, in einer durch eine Längsachse 2 definierten Längsrichtung einen mäanderförmigen Querschnitt. Mehrere, hier sechs im Abstand voneinander angeordnete Kerne 3a bis 3f sind an ihrer Unterseite durch je einen sogenannten Polrücken 4 magnetisch verbunden, wobei die Kerne 3 und die Polrücken 4 gewöhnlich auf Masse liegen. Zwischen den Kernen 3a bis 3f und oberhalb der Polrücken 4 besitzt die Magnetanordnung 1 quer zur Längsachse 2 verlaufende, rechteckige Querschnitte aufweisende Nuten, in denen um zugeordnete Kerne 3a bis 3f gewickelte Spulen 5a bis 5f angeordnet sind. Die Spulen 5a bis 5f bestehen aus nicht dargestellten Leitungsbändern mit einer der Höhe der Nuten entsprechenden Breite, die in engen Kontakt zueinander um die Kerne 3a bis 3f gewickelt sind.

Zwischen den einzelnen Lagen der Leitungsbänder sind nicht dargestellte Isolationsschichten vorgesehen, und zwischen den jeweiligen, radial am weitesten innen liegenden Lagen und den betreffenden Kernen 3a bis 3f befindet sich jeweils eine weitere Isolationsschicht 6a bis 6f. Außerdem sind die radial äußersten Lagen der Spulen 5a, 5b bzw. 5c, 5d bzw. 5e, 5f jeweils durch eine außen liegende Verbindungsleitung 7 elektrisch leitend verbunden, während die radial innersten Lagen der Spulen 5b, 5c bzw. 5d, 5e, durch je eine innen liegende Verbindungsleitung 8 elektrisch leitend miteinander verbunden sind, so daß sich in Längsrichtung äußere und innere Verbindungsleitungen 7, 8 einander abwechseln. Schließlich erfolgt die Anregung der Magnetanordnung 1 mittels eines Stromstellers 9, der mit der innersten Lage der Spule 5a verbunden ist, während die innerste Lage der Spule 5f an Masse liegt. Die Kerne 3a bis 3f bilden zusammen mit den zugehörigen Spulen 5a bis 5f je einen Magnetpol mit in Richtung der Längsachse 2 abwechselnder Polarität.

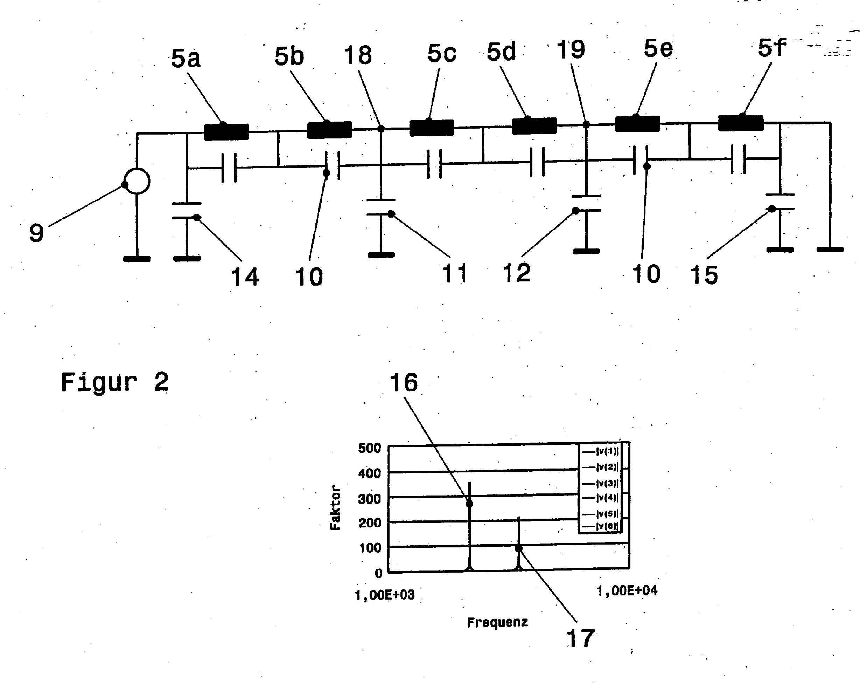

Das Ersatzschaltbild für die Magnetanordnung 1 nach Fig. 1 ist in Fig. 2 dargestellt, wobei gleiche Teile mit denselben Bezugszeichen versehen sind. Daraus ist ersichtlich, daß parallel zu den einzelnen Spulen 5a bis 5f jeweils von ihren Lagen gebildete, in Reihe liegende Längskapazitäten 10 vorhanden sind. Außerdem ist dort, wo die innersten Lagen der Spulen 5b, 5c bzw. 5d, 5e durch die Verbindungsleitungen 8 verbunden sind, je eine zu dem zugehörigen, an Masse liegenden Kern führende, vergleichsweise große Querkapazität 11 bzw. 12 und dort, wo die innersten Lagen der Spulen 5a, 5f einen von der innersten Lage nach außen geführten Anschluß aufweisen, je eine zur Masse führende Querkapazität 14, 15 vorhanden, die etwa halb so groß wie die Kapazität 11 bzw. 12 ist.

Aufgrund dieser Anordnung bilden die Spulen bzw. Induktivitäten 5a bis 5f mit den Kapazitäten 10 und 11 bis 15 einen Schwingkreis, in dem bei Anregung der Magnetanordnung 1 durch den Stromsteller 9 elektrische Schwingungen erzeugt werden, die in Abhängigkeit von der konstruktiven Ausgestaltung der Magnetanordnung 1 z.B. zwei Resonanzfrequenzen aufweisen, die in Fig. 2 unterhalb des Ersatzschaltbildes durch zwei Peaks 16 und 17 angedeutet sind.

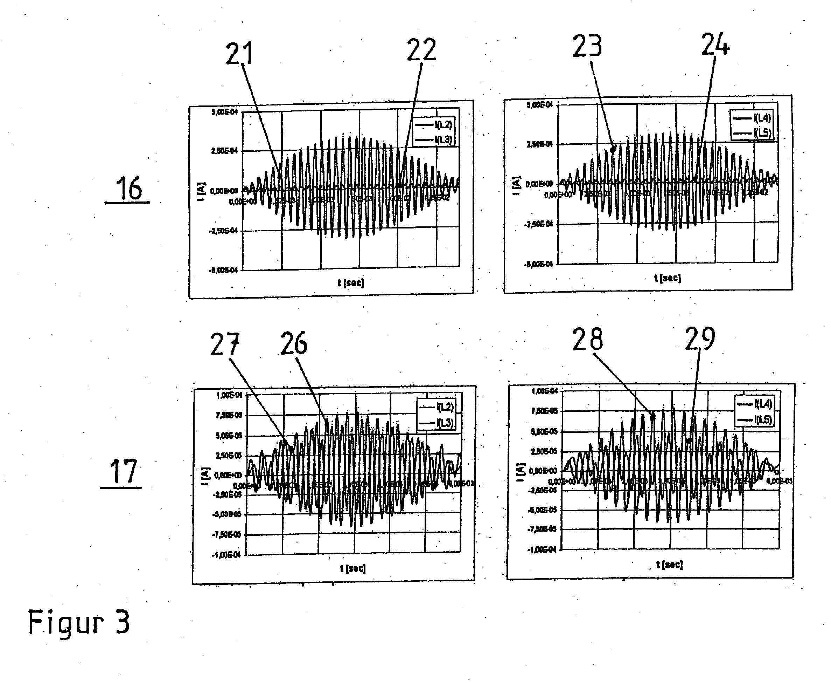

Besonders kritisch verhalten sich bei diesen Frequenzen zwei Verbindungspunkte 18 und 19 zwischen den Spulen 5b, 5c einerseits bzw. 5d, 5e (Fig 2) andererseits, die außerdem über die Kapazitäten 11, 12 zur Masse führen. An diesen Stellen sind, wie Fig. 1 zeigt, die innersten Lagen der Spulen 5b, 5c bzw. 5d, 5e miteinander verbunden. Wenn an diesen Stellen die Isolation 8 zum betreffenden Kern 3 bzw. zur Masse hin durchschlägt, tritt Kurzschluß ein, wodurch die Magnetanordnung 1 unbrauchbar wird. Dagegen sind andere Schaltungspunkte, z.B. wo die Spulen 5a, 5b bzw. 5c, 5d usw. außen verbunden sind, sowie die Verbindungspunkte, die an den Kapazitäten 14, 15 anliegen, vergleichsweise unkritisch. Eine Folge von allem ist, daß bei den Resonanzfrequenzen nach Fig. 2 die Spannungen an den Verbindungspunkten 18 und 19 stark ansteigen und die Ströme durch die benachbarten Spulen 5b bzw. 5c und 5d bzw. 5e sehr unterschiedliche Werte annehmen. Dies ergibt sich z.B. aus den in Fig. 3 gezeigten Meßkurven, in denen längs der Abszisse die Zeit und längs der Ordinate der Strom aufgetragen ist. Dabei ist oben links in Fig. 3 mit einer Kurve 21 der Strom durch die Spule 5b und mit einer Kurve 22 der Strom durch die Spule 5c für den Fall dargestellt, daß die Schaltung nach Fig. 2 mittels des Stromstellers 9 mit einer Sinusspannung nahe der einen Resonanzfrequenz (Peak 16) in Fig. 2 angeregt wird. Entsprechend sind oben rechts Kurven 23, 24 für die bei derselben Frequenz in den Spulen 5e bzw. 5d fließenden Ströme gezeigt. Im unteren Teil der Fig. 3 zeigen Kurven 25, 26 bzw. 28, 29 das Verhalten der Ströme bei der Anregung mit einer Frequenz, die nahe bei der durch den Peak 17 in Fig. 2 angegebenen Resonanzfrequenz liegt. Aus Fig. 3 folgt, daß die Ströme durch die Spulen 5b, 5c bzw. 5d, 5e und daher die den Verbindungspunkten 18, 19 zufließenden Ströme bzw. die von diesen Verbindungspunkten 18, 19 abfließenden Ströme stark voneinander abweichen. Außerdem sind die Ströme bei der Resonanzfrequenz gemäß Peak 17 jeweils um 180° phasenverschoben (Kurven 26, 27 bzw. 28, 29). Dabei können Spannungen in der Größenordnung von 10⁴ V im Vergleich zu üblichen Betriebsspannungen von ca. 440V auftreten, so daß die Differenzströme über die Kapazitäten 11 und 12 fließen und die Gefahr von Durchschlägen der Isolation zur Folge haben.

Erfindungsgemäß wird daher versucht, den Schwingkreis zu dämpfen, insbesondere die Ströme durch die Spulen 5b, 5c einerseits bzw. 5d, 5e andererseits derart zu reduzieren oder einander anzugleichen, daß die schädlichen Folgen der Resonanzen vermieden werden. Dabei wird von dem Gedanken Gebrauch gemacht, daß wesentliche Mittel zur Dämpfung bzw. Kompensation die ohnehin vorhandenen Polrücken 4 (Fig. 1) selbst sein können.

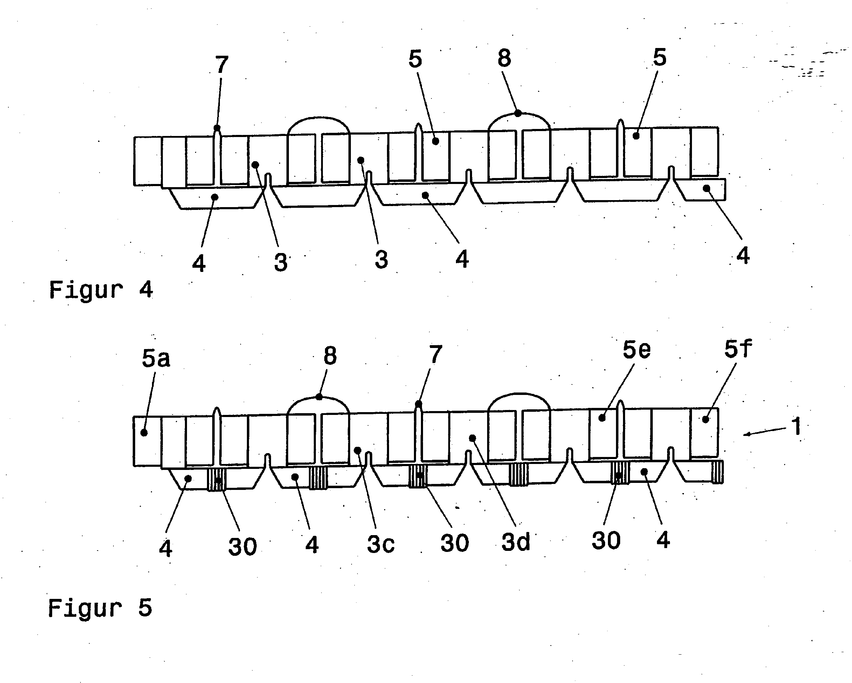

Beim Ausführungsbeispiel nach Fig. 4 wird vorgeschlagen, ausgewählte Polrücken 4 aus einem Material mit hohen Wirbelstromverlusten und/oder vorzugsweise aus massiven Bauteilen statt aus einzelnen Blechlamellen herzustellen. Da die einzelnen Spulen 5a bis 5f über die Eisenkerne 3 und Polrücken 4 magnetisch miteinander verkoppelt sind, führen Wirbelströme in den Polrücken 4 automatisch zu einer dynamischen Dämpfung. Durch die Wirbelströme entstehende geringe Verlustwärmen werden über den durchgehenden Eisenkörper der Magnetanordnung 1 abgeführt, insbesondere wenn die Polrücken 4 massiv ausgebildet sind. Die von den Verbindungspunkten 18, 19 über die Kapazitäten 11, 12 abfließenden Ströme lassen sich auf diese Weise stark reduzieren. Die an den Verbindungspunkten 18, 19 maximal auftretenden Spannungen sind dann so gering, daß sie weit unter den Durchschlagsspannungen für die betreffenden Isolationsschichten liegen.

Entsprechendes gilt, wenn ausgewählte Polrücken 4 gemäß Fig. 5 mit wenigstens je einer Kurzschlußwicklung 30 umwickelt werden. Insbesondere kann es zweckmäßig sein, diese Kurzschlußwicklungen 30 nicht aus hochwertigen Leitern wie z.B. Kupfer oder Aluminum, sondern z.B. aus Eisen herzustellen, um durch sie hohe Energieverluste zu erzeugen und eine wirksame dynamische Dämpfung zu bewirken.

Bei beiden Ausführungsbeispielen nach Fig. 4 und 5 sind vorzugsweise jeweils alle vorhandenen Polrücken 4 auch ausgewählte Polrücken 4, indem alle Polrücken 4 in gleicher Weise ausgebildet sind.

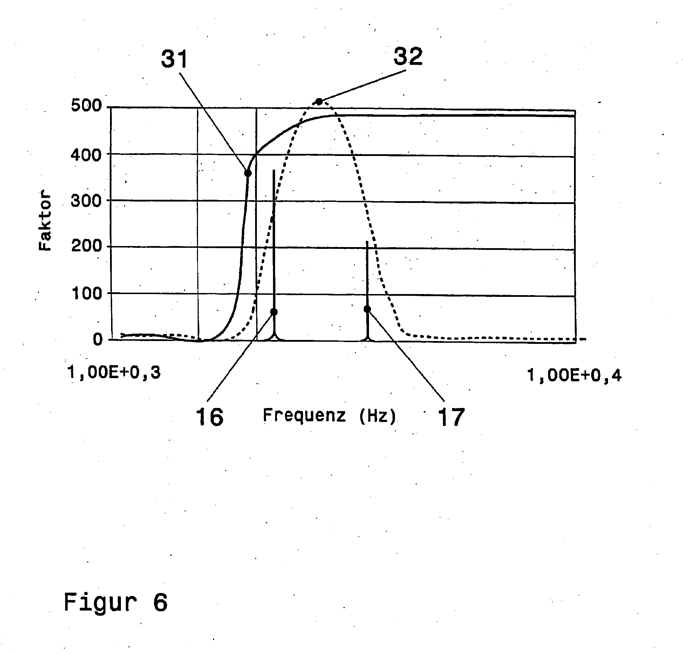

Beide Ausführungsbeispiele der Fig. 4 und 5 arbeiten außerdem passiv. Das Ausführungsbeispiel gemäß Fig. 4 wirkt nach Art eines Tiefpassfilters und führt zu einer Dämpfungskurve 31 gemäß Fig. 6. Das Ausführungsbeispiel gemäß Fig. 5 wirkt dagegen nach Art eines Bandfilters und führt zu einer Dämpfungskurve 32 in Fig. 6. Beide Dämpfungskurven 31, 32 umfassen die Resonanzfrequenzen 16 und 17.

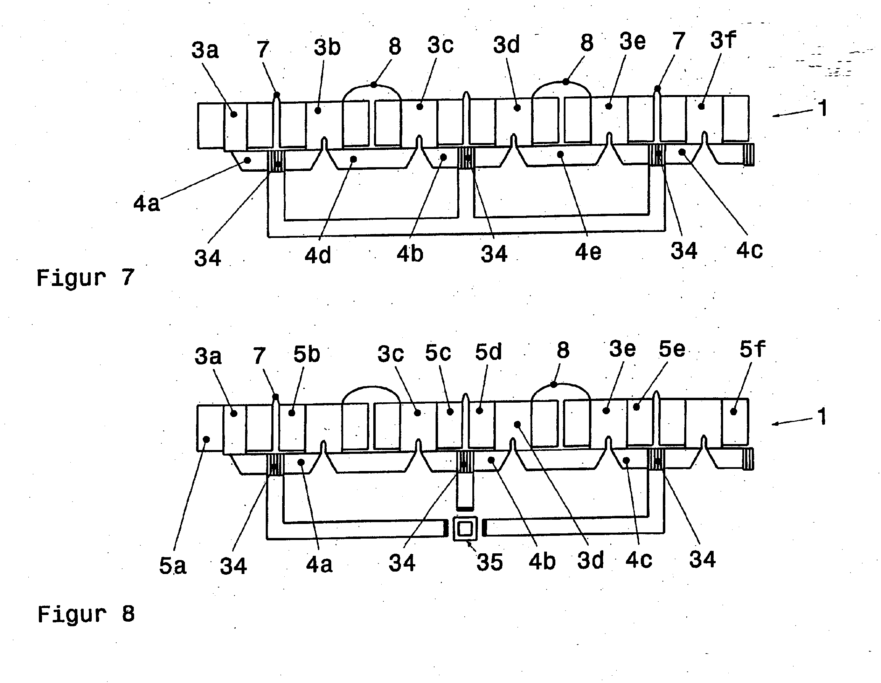

Die Ausführungsbeispiele nach Fig. 7 und 8 zeigen erfindungsgemäß aktive Einrichtungen zur Reduzierung der in den Spulen 5 auftretenden Resonanzschwingungen. Dabei ist gemäß Fig. 7 vorgesehen, ausgewählte Polrücken 4a, 4b und 4c, die die Kerne 3a, 3b bzw. 3c, 3d bzw. 3e, 3f miteinander verbinden, mit je einer Kompensationsspule 34 zu versehen und die drei Kompensationsspulen 34 galvanisch in Serienschaltung miteinander zu verbinden. Dabei wird die Anordnung so getroffen, daß der Fluß in den Polrücken 3a und 3b bzw. 3b und 3c jeweils im wesentlichen gleich ist. Da der Fluß in den nicht mit einer Kompensationsspule 34 versehenen Polrücken 3d und 3e die zugehörigen Spulen 5b und 5c (bzw. 5d und 5e) in gleicher Weise beeinflußt, hat beschriebene Anordnung zur Folge, daß die Ströme durch die Spulen 5b bzw. 5c einerseits und 5d bzw. 5e andererseits im wesentlichen gleich sind. Dadurch kann erreicht werden, daß zumindest die bei Resonanz auftretenden Stromspitzen in den Spulen so weit aneinander angeglichen und dadurch die Spannungsüberhöhungen an den Verbindungspunkten 18, 19 in Fig. 2 so weit reduziert werden, daß die über die Kapazitäten 11, 12 abfließenden Ströme unkritisch sind.

Ein Vorteil der mit Kurzschluß- bzw. Kompensationsspulen 30, 34 arbeitenden Ausführungsbeispiele besteht im übrigen darin, daß durch Wahl der Spulenparameter eine Anpassung an die im Einzelfall vorliegenden Resonanzfrequenzen vorgenommen werden kann. Entsprechendes gilt auch für das Ausführungsbeispiel nach Fig. 8, bei dem zwischen die Kompensationsspulen 34 noch jeweils ein allgemein mit dem Bezugszeichen 35 angedeuteter Transformator geschaltet ist. Auch hier ist die Phasenlage der durch Induktion in den Wicklungen 34 erzeugten Ströme bzw. der vom Transformator 35 abgegebenen Sekundärströme so zu wählen, daß sich die gewünschte Kompensationswirkung ergibt. Im Gegensatz zu Fig. 7 können mit dem Transformator 35 außerdem von 1:1 abweichende Übersetzungsverhältnisse eingestellt werden. Im übrigen können für die Polrücken 4 bei den Ausführungsbeispielen nach Fig. 5 bis 8 mit Vorteil auch aus einzelnen Lamellen zusammengesetzte Blechpakete angewendet werden.

Die Erfindung ist nicht auf die beschriebenen Ausführungsbeispiele beschränkt, die auf vielfache Weise abgewandelt werden können. Das gilt insbesondere für den Anwendungszweck der beschriebenen Magnetanordnung 1, die bei Bedarf auch in Führ- oder Bremsmagneten angewendet werden könnte. Weiter ist die Erfindung nicht auf Spulenwicklungen beschränkt, die aus flachen Leitungsbändern hergestellt sind, sondern in analoger Weise auch bei Spulen mit anderen Wicklungen anwendbar, wenn bei diesen die Dämpfung vergleichsweise gering ist. Ebenso ist die Zahl der pro Magnetanordnung 1 vorhandenen Magnetpole bzw. Kerne 3 weitgehend frei wählbar. Schließlich versteht sich, daß die verschiedenen Merkmale auch in anderen als den beschriebenen und dargestellten Kombinationen angewendet werden können.

## Patentansprüche

1. Magnetanordnung für Trag-, Führ- und/oder Bremssysteme bei Magnetschwebefahrzeugen, enthaltend einen Elektromagneten mit einer Mehrzahl von Magnetpolen, die in einer Längsrichtung hinter einander angeordnete, durch Polrücken (4) verbundene Kerne (3a bis 3f) und auf die Kerne (3a bis 3f) gewickelte Spulen (5a bis 5f) aufweisen, die abwechselnd innen und außen mit der in Längsrichtung nachfolgenden Spule (5a bis 5f) verbunden sind, **dadurch gekennzeichnet, daß** zumindest ausgewählte Polrücken (4) als Bestandteile Einer Einrichtung zur Reduzierung von den sputer Auftretenden Electromagnetischen Schwingungen Ausgebildet sind.

2. Magnetanordnung nach Anspruch 1 **dadurch gekennzeichnet, daß** die ausgewählten Polrücken (4) zur Dämpfung der elektrischen Schwingungen aus einem Material mit hohen Wirbelstromverlusten bestehen.

3. Magnetanordnung nach Anspruch 2, **dadurch gekennzeichnet, daß** alle vorhandenen Magnetrücken (4) ausgewählt sind und aus einem Material mit hohen Wirbelstromverlusten bestehen.

4. Magnetanordnung nach einem der Ansprüche 1 bis 3 **dadurch gekennzeichnet, daß** die ausgewählten Polrücken (4) mit einer Kurzschlußwicklung (30) umwickelt sind.

5. Magnetanordnung nach Anspruch 4, **dadurch gekennzeichnet, daß** alle Polrücken (4) ausgewählt und mit einer Kurzschlußwicklung (30) umwickelt sind.

6. Magnetanordnung nach einem der Ansprüche 1 bis 5, **dadurch gekennzeichnet, daß** die ausgewählten Polrücken (4a, 4b, 4c) zur Kompensation der in den Spulen (5a bis 5f) insbesondere bei Resonanz erzeugten Ströme mit Kompensationsspulen (34) umwickelt und die Kompensationsspulen (34) elektrisch leitend miteinander verbunden sind.

7. Magnetanordnung nach Anspruch 6, **dadurch gekennzeichnet, daß** diejenigen Polrücken (4a, 4b, 4c) als ausgewählte Polrücken vorgesehen sind, die die Kerne von zwei außen miteinander verbundenen Spulen (5a, 5b; 5c, 5d; 5e, 5f) verbinden.

8. Magnetanordnung nach einem der Ansprüche 6 oder 7, **dadurch gekennzeichnet, daß** die Kompensationsspulen (34) über zwischengeschaltete Transformatoren (35) miteinander verbunden sind.

9. Magnetanordnung nach einem der Ansprüche 6 bis 8, **dadurch gekennzeichnet, daß** die ausgewählten Polrücken (4a, 4b, 4c) aus einem aus einzelnen Blechen hergestellten Blechpaket bestehen.

## Claims

1. A magnetic arrangement for supporting, guiding and/or braking systems in maglev vehicles, containing an electromagnet with a plurality of magnetic poles which have cores (3a to 3f), which are arranged one after the other in a longitudinal direction and are connected by pole backs (4), and coils (5a to 5f), which are wound onto the cores (3a to 3f) and are connected alternately on the inside and the outside to the coil (5a to 5f) following it in the longitudinal direction, **characterised in that** at least selected pole backs (4) are formed as components of a means for reducing electromagnetic oscillations occurring in the coils.

2. The magnetic arrangement according to Claim 1, **characterised in that** the selected pole backs (4) for damping the electrical oscillations consist of a material with high eddy current losses.

3. The magnetic arrangement according to Claim 2, **characterised in that** all the magnet backs (4) present are selected and consist of a material having high eddy current losses.

4. The magnetic arrangement according to one of Claims 1 to 3, **characterised in that** the selected pole backs (4) are wound with a short circuit winding (30).

5. The magnetic arrangement according to Claim 4, **characterised in that** all the pole backs (4) are selected and wound with a short circuit winding (30).

6. The magnetic arrangement according to one of Claims 1 to 5, **characterised in that** the selected pole backs (4a, 4b, 4c) are wound with compensation coils (34) for compensation of the currents generated in the coils (5a to 5f), in particular in the event of resonance, and the compensation coils (34) are connected to each other in an electrically conductive manner.

7. The magnetic arrangement according to Claim 6, **characterised in that** the pole backs (4a, 4b, 4c) which connect the cores of two coils (5a, 5b; 5c, 5d; 5e, 5f) which are connected to each other on the outside are provided as selected pole backs.

8. The magnetic arrangement according to one of Claims 6 or 7, **characterised in that** the compensation coils (34) are connected to each other by means of interposed transformers (35).

9. The magnetic arrangement according to one of Claims 6 to 8, **characterised in that** the selected pole backs (4a, 4b, 4c) consist of a plate stack produced from individual plates.

## Revendications

1. Agencement d'aimant pour des systèmes de support, de guidage et/ou de freinage pour véhicules à suspension magnétique, contenant un électroaimant avec une pluralité de pôles d'aimant, qui présentent des noyaux (3a à 3f) reliés par des dos de pôles (4), disposés les uns derrière les autres dans une direction longitudinale et des bobines (5a à 5f) enroulées sur les noyaux (3a à 3f), qui sont reliés en alternance à l'intérieur et à l'extérieur avec la bobine suivante (5a à 5f) dans la direction longitudinale, **caractérisé en ce que** au moins des dos de pôles (4) sélectionnés sont conçus comme des parties intégrantes d'un dispositif de réduction des oscillations électromagnétiques se produisant dans la bobine.

2. Agencement d'aimant selon la revendication 1, **caractérisé en ce que** les dos de pôles (4) sélectionnés sont constitués, pour atténuer les oscillations magnétiques, d'un matériau avec des pertes élevées de courant de Foucault.

3. Agencement d'aimant selon la revendication 2, **caractérisé en ce que** tous les dos de pôles (4) présents sont sélectionnés et sont constitués d'un matériau avec des pertes élevées de courant de Foucault.

4. Agencement d'aimant selon une des revendications 1 à 3, **caractérisé en ce que** les dos de pôles (4) sélectionnés sont enroulés avec un enroulement de court-circuit (30).

5. Agencement d'aimant selon la revendication 4, **caractérisé en ce que** tous les dos de pôles (4) sont sélectionnés et sont enroulés avec un enroulement de court-circuit (30).

6. Agencement d'aimant selon une des revendications 1 à 5, **caractérisé en ce que** les dos de pôles sélectionnés (4a, 4b, 4c) sont enroulés afin de compenser les courants générés dans les bobines (5a à 5f) notamment par résonance avec des bobines de compensation (34) et les bobines de compensation (34) sont reliés les unes aux autres de manière électriquement conductrice.

7. Agencement d'aimant selon la revendication 6, **caractérisé en ce que** les dos de pôles (4a, 4b, 4c), qui relient les noyaux de deux bobines reliées l'une à l'autre à l'extérieur (5a, 5b ; 5c, 5d ; 5e, 5f), sont prévus comme dos de pôles sélectionnés.

8. Agencement d'aimant selon une des revendications 6 à 7, **caractérisé en ce que** les bobines de compensation (34) sont reliées les unes aux autres par l'intermédiaire de transformateurs (35) intercalés.

9. Agencement d'aimant selon une des revendications 6 à 8, **caractérisé en ce que** les dos de pôles sélectionnés (4a, 4b, 4c) sont constitués d'un empilage de tôles fabriqué à partir de tôles individuelles.
